# FASCICULE DE BREVET EUROPEEN

(11) **EP 2 666 878 B1**
(45) Date de publication et mention de la délivrance du brevet: **17.12.2014**
(21) Numéro de dépôt: 13168275.9
(22) Date de dépôt: 17.05.2013
(51) Int. Cl.: C22C 1/04, C22C 1/05, C22C 1/10, B22F 1/00, B22F 3/00, B22F 5/00, B23P 15/28, B23P 15/40, B26B 19/04, B22F 3/22, B22C 1/16

(54) **Couteau de tondeuse autolubrifiant et son procede de fabrication**
Selbstschmierendes Rasierapparatmesser, und sein Herstellungsprozess
Self-lubricating mower blade and method for manufacturing same

(30) Priorité: 25.05.2012 FR 1254872
(43) Date de publication de la demande: 27.11.2013
(73) Titulaire: SEB S.A., 69130 Ecully (FR)
(72) Inventeur: Giraud, Camille, 69002 LYON (FR); Mandica, Franck, 69340 FRANCHEVILLE (FR)
(74) Mandataire: Guéry-Jacques, Géraldine

(56) Documents cités:
- GB-A- 2 288 609
- US-A- 4 946 499
- US-A- 5 279 640
- US-A1- 2011 033 250

## Description

La présente invention concerne le domaine technique de la fabrication de pièces mécaniques destinées à être en contact avec d'autres pièces mécaniques en mouvement. Dans une application préférée mais non exclusive, l'invention concerne le domaine de la fabrication d'outils de coupe tels que notamment les outils de coupe destinés à travailler par paire en cisaillement comme les lames de tondeuse à cheveux ou poils électriques ou non.

Un bloc de coupe d'une tondeuse électrique comprend généralement, comme le décrit une demande de brevet FR 2 892 902, un couteau fixe qui coopère avec un couteau mobile en appui sur le couteau fixe et oscillant par rapport à ce dernier. Le couteau fixe comprend un corps à partir duquel s'étend une série de dents dont les bords ne sont pas nécessairement tranchants. Le couteau mobile comprend, lui aussi, un corps à partir duquel s'étend une série de dents avec des arêtes tranchantes. Pour des raisons de tranchant, de durabilité voire d'esthétisme le couteau mobile et le couteau fixe sont généralement réalisés en métal, par usinage ou emboutissage. En raisons de frottements importants, il est alors nécessaire de lubrifier régulièrement les couteaux afin d'éviter leur usure prématurée et de garantir une coupe efficace des cheveux ou poils. Même dans le cas de couteaux possédant des revêtements particuliers, souvent destinés à abaisser le coefficient de frottement ou à augmenter la dureté et donc améliorer le tranchant, la lubrification extérieure régulière des couteaux reste indispensable pour assurer la performance de coupe. Le recours à cette lubrification périodique au moyen, généralement, d'une huile synthétique est, cependant, fastidieux pour l'utilisateur et se trouve être la source d'un encrassement assez rapide dans la mesure où les poils coupés adhèrent aux couteaux en raison de la présence d'huile.

Des blocs de coupe de tondeuse pour lesquels le couple de couteaux est composé d'une part d'un couteau en métal et d'autre part d'un couteau en céramique sont alors apparus dans le but d'améliorer le tranchant des couteaux. En effet, la dureté des céramiques est généralement plus importante que celle des métaux. Mais cela n'est pas satisfaisant, les couteaux en céramique sont fragiles et de géométrie moins précise que les couteaux métalliques, principalement du fait de leur procédé de fabrication. Ainsi, les angles des dents des couteaux en céramique ne peuvent pas être choisis trop faibles, et le tranchant de tels couteaux n'est donc en fait pas très bon.

Des blocs de coupe de tondeuse sont aussi apparus avec au moins un couteau poreux obtenu par frittage, les interstices étant imprégnés d'huile lubrifiante. Ce lubrifiant, est destiné à se libérer au fur et à mesure. La libération s'effectue cependant autant en usage que hors usage et la lubrification n'est pas satisfaisante sur la durée car l'huile est libérée trop rapidement.

Il est donc apparu le besoin de couteaux qui, tout en présentant une durée d'utilisation équivalente à celle des couteaux métalliques selon l'art antérieur, permettent de ne plus recourir à la lubrification extérieure par adjonction d'huile. Il est à noter qu'une telle problématique de lubrification se pose également pour d'autres pièces mécaniques, particulièrement des pièces qui sont en contact et déplacement avec au moins une autre pièce, l'ensemble nécessitant une lubrification. Tel est, par exemple, le cas pour les outils de coupe utilisés dans le domaine de soins corporels comme l'épilation, le rasage mais également dans d'autres domaines que celui des dispositifs de soins corporels.

Afin d'atteindre cet objectif l'invention concerne, un procédé de fabrication d'une pièce de coupe comprenant les étapes successives suivantes :
- mise en oeuvre d'un mélange comprenant au moins des particules d'un solide structurant et un liant présentant une température de fusion inférieure à celle du solide structurant,
- malaxage et chauffage du mélange jusqu' à une température supérieure ou égale à la température de fusion du liant et inférieure à la température de fusion du solide structurant,
- injection sous pression dans un moule du fluide ainsi formé,
- refroidissement, dans le moule, de la pièce jusqu'à une température inférieure à la température de fusion du liant,
- éjection de la pièce refroidie hors du moule,
- élimination du liant de la pièce,
- frittage de la pièce,

Selon une caractéristique essentielle de l'invention, le mélange comprend au moins :
- des particules solides d'un solide structurant choisi parmi :
   - un métal,
   - un alliage métallique,
   - une céramique,
   - un mélange de céramiques,
   - un composite métal-céramique,
   - ou un mélange des solides structurants précédents,
- un liant,
- des particules d'un lubrifiant solide présentant une température de fusion supérieure à la température de fusion du liant.

La mise en oeuvre de ce procédé permet d'obtenir une pièce de coupe constituée d'un matériau comprenant une matrice formée par les particules solides structurantes dans laquelle sont dispersées des particules d'un lubrifiant solide. Une telle pièce présente alors une surface avec un faible coefficient de friction de sorte qu'elle peut travailler en contact direct avec une autre pièce sans nécessiter de lubrification extérieure supplémentaire telle qu'une lubrification à l'huile. En effet, la répartition homogène de lubrifiant solide dans toute la masse de la matrice constituée par le solide structurant permet de renouveler la lubrification de manière continue et contrôlée en mettant en oeuvre le phénomène de diffusion solide en cas d'usure de la pièce ou d'arrachage de lubrifiant solide au niveau des surfaces de travail externes de la pièce. Ceci permet d'obtenir une pièce avec autolubrification durable, toutes propriétés égales par ailleurs en particulier les propriétés mécaniques de dureté et de résistance. Ainsi, les surfaces extérieures, de la pièce obtenue selon l'invention, présentent un coefficient de frottement sensiblement inférieur à celui des surfaces extérieures d'une pièce obtenue avec le même solide structurant mais sans la mise en oeuvre du lubrifiant solide.

De plus, la mise en oeuvre d'un tel procédé faisant intervenir un moulage par injection de métal ou de céramique, en anglais MIM pour « Metal Injection Molding », CIM pour « Ceramic Injection Molding » et plus généralement moulage par injection de poudre PIM dont l'acronyme anglais est « Powder Injection Molding », permet de fabriquer en grandes quantités, à un coût raisonnable et avec une mise en oeuvre facile des pièces de composition et donc de propriété très variée. Ce procédé est notamment adapté à la production de pièces de petites dimensions, telles que des pièces de faible masse et plutôt fines, de formes complexes qui seraient difficiles à usiner ou à assembler par un autre procédé. De plus, les pièces obtenues présentent de très bonnes qualités mécaniques notamment une forte densité et un bon état de surface.

Au sens de l'invention, un lubrifiant solide est un matériau solide, dans les conditions normales ambiantes, qui, intégré dans une pièce ou une substance, permet de réduire les frottements entre des pièces mécaniques en contact et en mouvement, sans adjonction d'un lubrifiant extérieur de type huile. Le recours à un lubrifiant solide assure une lubrification durable, c'est-à-dire au moins pendant toute la durée de vie des pièces mécaniques utilisées. C'est pourquoi, un mécanisme auquel est intégré un lubrifiant solide peut être dit « autolubrifiant », ou encore « lubrifiant à sec ». Pour que l'autolubrification d'une pièce soit efficace, le lubrifiant solide doit être intégré de manière homogène dans la masse de la pièce.

Au sens de l'invention un liant est un matériau présentant une température de fusion inférieure à celles des particules solides. Il peut s'agir par exemple d'un polymère organique. Le liant peut être constitué de plusieurs composants de natures différentes et en proportion diverses : en particulier, certains composants du liant sont dits « principaux », tandis que d'autres, présents en plus faibles quantités, sont dits « additifs ». Le liant mis en oeuvre est, de préférence, essentiellement organique, c'est-à-dire composé à plus de 80% de matière organique. Ainsi, le liant peut être composé d'un mélange d'un ou de plusieurs matériau organique et, en faible quantité d'un ou de plusieurs additifs éventuellement non organiques.

Selon une caractéristique de l'invention, le lubrifiant solide est choisi parmi :
- le disulfure de molybdène MoS₂,
- l'étain Sn, le cuivre Cu, le zinc Zn, le plomb Pb, ou des alliages de ces métaux
- le nitrure de bore BN,
- l'argent Ag,
- le graphite,
- des mélanges de ces matériaux.

Selon une autre caractéristique de l'invention, le solide structurant est choisi parmi :
- les aciers,
- les aciers inoxydables,
- les aciers faiblement alliés
- les alliages métalliques,
- les alliages magnétiques,
- les métaux réfractaires,
- les métaux durs,
- les céramiques,
- des mélanges de ceux-ci.

Parmi, les alliages métalliques susceptibles d'être mis en oeuvre, il est possible de citer les alliages à base de fer, de nickel, de cuivre, de cobalt, de titane. Parmi les métaux réfractaires qui peuvent être utilisés, il y a notamment le niobium, le molybdène, le tantale, le tungstène, et le rhénium. Parmi les métaux durs utilisables, il peut être nommé le tantale, le titane, le tungstène et le vanadium notamment. Les céramiques mises en oeuvre peuvent par exemple être des céramiques à base d'alumine, de zircone, d'oxyde de calcium, de magnésium, de silice, ainsi que de divers nitrures et carbures, notamment le carbure de tungstène.

Selon encore une autre caractéristique de l'invention, le liant est choisi parmi :
- un liant à base de polymère thermoplastique ou de cire
- un liant polyacétal,
- un liant soluble à l'eau
- un liant gélifiant ou réticulant
- un verre.

Selon une forme de mise en oeuvre de l'invention, le mélange solide comprend en poids :
- entre 70% et 99,9% en poids de particules du solide structurant,
- entre 0,1 % et 30% en poids de particules du lubrifiant solide.

Selon une autre forme de mise en oeuvre de l'invention, les particules solides possèdent une taille inférieure ou égale à 100µm, de préférence une taille comprise entre 0,1µm et 50µm, et de manière plus particulièrement préférée comprise entre 1µm et 20µm.

Selon une caractéristique de l'invention, la pièce finale comprend en poids :
- entre 0,1 % et 20% de lubrifiant solide et, de manière préférée, entre 1% et 10% de lubrifiant solide,
- le complément en masse de solide structurant.

Selon une forme de mise en oeuvre de l'invention, les particules solides possèdent une taille inférieure ou égale à 1µm de manière à obtenir une poudre très réactive au frittage et ainsi abaisser la température et la durée de cette étape. Une telle taille de particules permet également d'augmenter la résistance à la corrosion de la pièce finie en raison de la fine taille de grains.

Selon l'invention, le mélange des particules de solide structurant et de lubrifiant solide avec le liant peut être réalisé juste avant l'injection à partir de poudres de solide structurant, de lubrifiant solide et de liant. Les poudres sont alors chauffées à une température supérieure à la température de fusion du liant, mais inférieure aux températures de fusion respectives du solide structurant et du lubrifiant solide, tout en étant malaxées jusqu'à obtention d'un mélange visqueux dans lequel les particules sont enrobées de liant de manière homogène. Le fluide ainsi obtenu peut alors être porté à une température adéquate pour être injecté directement dans le moule.

Selon l'invention, le mélange des particules de solide structurant et de lubrifiant solide avec le liant peut aussi être réalisé à partir de granulés constitués d'un mélange solide des particules de solide structurant et de liant qui sont malaxés avec une poudre de particules de lubrifiant solide. Ce mélange est alors malaxé et chauffé à une température supérieure à la température de fusion du liant, mais inférieure aux températures de fusion respectives du solide structurant et du lubrifiant solide, jusqu'à obtention d'un mélange visqueux dans lequel les particules sont enrobées de liant de manière homogène. Le fluide ainsi obtenu peut alors être porté à une température adéquate pour être injecté directement dans le moule.

Selon une forme de mise en oeuvre de l'invention, le mélange utilisé se présente initialement sous la forme de granulés d'un mélange solide comprenant le liant et les particules de solide structurant et de lubrifiant solide. Les granulés sont alors malaxés et chauffés à une température supérieure à la température de fusion du liant, mais inférieure aux températures de fusion respectives du solide structurant et du lubrifiant solide, pour former le fluide apte à être injecté. Les granulés mis en oeuvre peuvent alors être fournis par un tiers ou au contraire fabriqués dans le cas du processus selon l'invention de production de la pièce.

Ainsi, selon une forme de mise en oeuvre de l'invention, le procédé de fabrication comprend, préalablement à la mise en oeuvre du mélange, une séquence de préparation des granulés de mélange solide, séquence qui comprend les étapes suivantes :
- mise en oeuvre de particules d'un solide structurant,
- mise en oeuvre de particules d'un lubrifiant solide,
- mise en oeuvre d'un liant,
- malaxage et chauffage des trois composants, à une température suffisante pour assurer une fusion au moins partielle du liant,
- refroidissement du mélange, jusqu'à solidification du liant,
- broyage du mélange pour produire les granulés du mélange solide comprenant au moins les particules solides de solide structurant, les particules de lubrifiant solide et le liant.

Selon une variante de cette forme de mise en oeuvre, les particules solides possèdent une taille inférieure ou égale à 100 µm, de préférence une taille comprise entre 0,1 µm et 50 µm, et de manière plus particulièrement préférée comprise entre 1 µm et 20 µm.

Selon une variante de cette forme de mise en oeuvre, les particules de lubrifiant solide possèdent une taille comprise entre 5 µm et 100 µm.

Selon une autre variante de cette forme de mise en oeuvre :
- le volume de particules de solide structurant, appelé « taux de charge » représente entre 40% et 75%, préférentiellement entre 55 % et 60 % du volume total de particules,
- le volume de particules de lubrifiant solide représente entre 1 % et 30 % du volume total de particules,
- le volume de liant représente le complément en volume.

Selon une caractéristique de cette forme de mise en oeuvre :
- le volume de particules solides, de solide structurant et de lubrifiant solide, représente entre 40% et 75%, préférentiellement entre 55 % et 60 %, du volume total de mélange solide,
- le volume de liant représente le complément en volume.

Selon une caractéristique de l'invention, la pièce de coupe métallique fabriquée est un couteau de tondeuse à cheveux ou poils comprenant un corps à partir duquel s'étend une série de dents qui comprennent une face de contact avec une autre surface de travail.

Selon une variante de cette caractéristique, chaque dent présente au moins une arête tranchante.

L'invention concerne aussi un couteau de tondeuse à cheveux ou poils comprenant un corps à partir duquel s'étend une série de dents et au moins une surface de contact avec un autre couteau. Selon l'invention, le couteau de tondeuse est constitué au moins en partie d'un matériau autolubrifiant comprenant :
- une matrice formée d'un matériau choisi parmi :
   - un métal,
   - un alliage métallique,
   - une céramique,
   - un mélange de céramiques,
   - un composite métal-céramique,
   - un mélange de ces matériaux,
- des particules d'un lubrifiant solide dispersées dans la matrice, le lubrifiant solide étant choisi parmi :
   - le disulfure de molybdène MoS₂,
   - le nitrure de bore BN,
   - le graphite,
   - l'étain Sn ou le cuivre Cu ou le zinc Zn ou le plomb Pb ou des alliages de ces métaux,
   - l'argent Ag,
   - des mélanges de ces matériaux.

Selon une caractéristique de l'invention, chaque dent du couteau de tondeuse comprend au moins une arête tranchante.

Selon une autre caractéristique de l'invention, le couteau de tondeuse est obtenu par le procédé de fabrication selon l'invention.

L'invention concerne aussi un bloc de coupe pour une tondeuse à cheveux ou poils comprenant au moins un couteau de tondeuse selon l'invention et un couteau comprenant un corps à partir duquel s'étend une série de dents et au moins une surface de contact avec les dents de l'autre couteau.

Bien entendu, les différentes caractéristiques, variantes et formes de mise en oeuvre du procédé selon l'invention peuvent être associées les unes avec les autres selon diverses combinaisons dans la mesure où elles ne sont pas incompatibles ou exclusives les unes des autres. Il en est de même pour les différentes caractéristiques, variantes et formes de réalisation d'un couteau de tondeuse et d'un bloc de coupe de tondeuse selon l'invention, qui peuvent être associées les unes avec les autres selon diverses combinaisons dans la mesure où elles ne sont pas incompatibles ou exclusives les unes des autres.

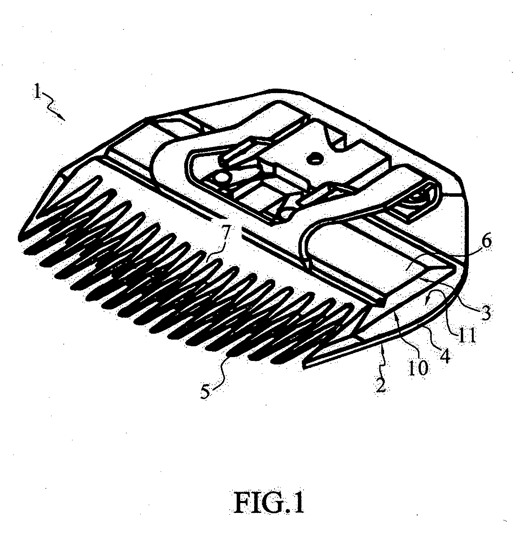

Par ailleurs, diverses autres caractéristiques de l'invention ressortent de la description détaillée effectuée en référence à la figure 1 qui illustre une forme non limitative de réalisation d'un bloc de coupe selon l'invention pour tondeuse corporelle.

Un bloc de coupe 1 pour tondeuse électrique à cheveux ou poils comprend généralement, comme le montre la figure 1, deux couteaux 2 et 3 qui sont entraînés en mouvement alternatif de translation l'un par rapport à l'autre par un mécanisme non représenté et bien connu de l'homme du métier. Le plus souvent le couteau inférieur 2 est fixe par rapport au châssis de la tondeuse tandis que le couteau supérieur 3 est mobile par rapport au couteau inférieur 2.

Le couteau fixe 2 comprend un corps 4 à partir duquel s'étendent une série de dents ou lames 5 qui possèdent chacune une forme sensiblement triangulaire comme cela ressort de la figure 1. De la même manière le couteau mobile 3, comprend un corps 6 qui porte également une série de dents 7 qui sont aussi chacune de forme générale triangulaire. A la différence des lames 5 du couteau fixe 2, les dents 7 du couteau mobile 3 possèdent, selon l'exemple illustré, chacune deux arêtes tranchantes qui forment les côtés du triangle correspondant. Bien entendu, les dents 5 du couteau fixe 2 pourraient également présenter des arêtes tranchantes.

Les dents 7 du couteau mobile 3 sont placées sensiblement au-dessus des dents 5 du couteau fixe 2, la face inférieure des dents 7 étant, en partie au moins, en appui sur la face supérieure des dents 5. Par ailleurs, le corps 6 du couteau mobile 3 présente au niveau de sa face inférieure 10 une surface plane de contact avec une surface plane de la face supérieure 11 du couteau fixe 2.

Afin de limiter les frottements, l'invention propose de réaliser l'un au moins des couteaux voire les deux couteaux 2 et 3 en un matériau autolubrifiant formé d'une matrice dans laquelle est dispersé un lubrifiant solide. La matrice peut-être de nature métallique, céramique, ou encore composite métal-céramique également appelé cermet.

Ainsi, selon l'invention la matrice est donc formée par un matériau choisi parmi : un métal, un alliage métallique, une céramique, un mélange de céramiques, un composite métal-céramique, un mélange de ces matériaux.

Plus précisément, le solide structurant est choisi parmi :
- les aciers,
- les aciers inoxydables,
- les aciers faiblement alliés,
- les alliages métalliques (par exemple : à base de fer, de nickel, de cuivre, de cobalt, de titane),
- les alliages magnétiques,
- les métaux réfractaires,
- les métaux durs,
- les céramiques (par exemple : à base d'alumine, de zircone, d'oxyde de calcium, de magnésium, de silice, ainsi que divers nitrures et carbures, notamment le carbure de tungstène),
- les mélanges de ceux-ci.

De manière préférée, le matériau constitutif de la matrice est un acier inoxydable, par exemple, de nuance de désignation courante 316L.

Le lubrifiant solide est alors de préférence choisi parmi : le disulfure de molybdène MoS₂, le nitrure de bore BN, le graphite, l'étain Sn ou le cuivre Cu ou le zinc Zn ou le plomb Pb ou des alliages de ces métaux, l'argent Ag, des mélanges de ces matériaux.

De manière plus particulièrement préférée, le lubrifiant solide utilisé est du disulfure de molybdène MoS₂.

Un couteau selon l'invention dans un tel matériau autolubrifiant est fabriqué sur la base de la technologie dite de moulage de poudre par injection, d'acronyme anglais PIM pour « Powder Injection Molding ». Dans le cas d'une matrice métallique cette technique est désignée par l'acronyme MIM pour en anglais « Metal Injection Molding » et dans le cas d'une matrice céramique cette technique est désignée par l'acronyme CIM pour « Ceramic Injection Molding ».

Selon un mode préféré mais non exclusif de fabrication d'un couteau en matériau autolubrifiant selon l'invention, le processus de fabrication fait intervenir la préparation des granulés de composé solide utilisés dans la phase d'injection moulage comme cela apparaîtra par la suite. Toutefois, selon l'invention, la préparation des granulés du composé solide pourrait être réalisée par un tiers qui fournirait alors ces granulés au fabricant du couteau pour tondeuse selon l'invention ou d'une pièce mécanique en matériau autolubrifiant conforme à l'invention. Dans le procédé classique de moulage de poudre par injection, le mélange solide duquel sont constitués les granulés est couramment appelé «feedstock».

La préparation des granulés de composé solide utilisés fait intervenir un mélange ou malaxage associé à un chauffage d'au moins trois composants à savoir :
- des particules d'un solide structurant destinées à former la matrice,
- des particules d'un lubrifiant solide destinées à former les particules de lubrifiant solide dispersées dans la matrice,
- et un liant qui est destiné à assurer la cohésion des particules de solide structurant et de lubrifiant solide dans une étape de moulage injection et qui est destiné à être éliminé après cette étape comme cela apparaîtra par la suite.

Le liant peut-être de toute nature appropriée et par exemple choisi parmi :
- un liant à base de polymère thermoplastique (par exemple : polyéthylène, polypropylène, polystyrène, polyamide, polyméthacrylate de butyle, polycarbonate, ...) ou de cire (par exemple : cires naturelles, paraffine, cire d'éthylènediamide)
- un liant polyacétal (par exemple : polyoxyméthylène)
- un liant soluble à l'eau (par exemple : polyéthylène glycol, ou copolymère alcool de polyvinyle / polyacétate de vinyle)
- un liant gélifiant ou réticulant (par exemple : polysaccharides, agar-agar, cellulose de méthyle, glycol de (méthoxy)polyéthylène, polymère acrylique),
- un verre,
- un mélange de ces liants.

Le liant peut être par exemple plutôt à base organique ou aqueuse, quand le solvant est l'eau. Le liant peut contenir principalement certains des polymères cités ci-dessus mais également des additifs en plus faibles proportions, comme, par exemple, d'autres cires, de l'acide stéarique, de l'acide oléique, des esters, de la glycérine, de l'acide borique, des phtalates ou de la guanidine. De tels additifs peuvent par exemple avoir un rôle de dispersant, pour éviter les trop gros agrégats de particules solides, un rôle d'agent mouillant de la poudre, pour assurer un enrobage uniforme des particules solides lors du malaxage), un rôle de plastifiant, pour abaisser la viscosité du fluide obtenu par chauffage des granulés de mélange solide, ou encore un rôle d'agent, dit de déliantage, facilitant l'élimination des différents composants du liant entre les étapes de moulage et de frittage.

Les propriétés idéales d'un liant, recherchées à travers les différents constituants, peuvent être par exemple qu'il disperse et mouille bien les poudres, qu'il permette une faible viscosité du mélange à basse température pour l'injection, qu'il résiste thermiquement à la mise en forme sans se dégrader, qu'il soit chimiquement inerte et stable et qu'il s'élimine facilement lors de l'étape correspondante.

Les poudres de solide structurant et de lubrifiant solide utilisées pour la préparation des granulés de composé solide comprennent de préférence des particules d'une taille inférieure ou égale à 100µm, de préférence une taille comprise entre 0,1µm et 50µm, et de manière plus particulièrement préférée comprise entre 1µm et 20µm. Une taille inférieure à 1µm peut être privilégiée pour que la poudre mise en oeuvre soit très réactive lors de l'étape ultérieure de frittage ; cela peut permettre de réduire la température et la durée du frittage, ou encore d'augmenter la résistance à la corrosion de la pièce finale grâce à l'obtention d'une structure à très fine taille de grains.

La distribution en taille des particules constitutives des poudres peut être choisie de manière à être assez étendue pour augmenter la compacité de la pièce finie. En effet, les petites particules occupent les interstices entre les plus grandes particules. La géométrie des particules peut également être choisie en fonction des effets recherchés. En effet, une forme sensiblement sphérique des particules facilite le moulage tandis qu'une forme anguleuse ou plus irrégulière contribue à la cohésion de la pièce moulée après élimination du liant et avant frittage. Il peut donc être effectué des mélanges de particules de forme régulière avec des particules de forme irrégulière. A cet égard, lorsque le solide structurant est un alliage ferreux, les poudres obtenues par atomisation à l'eau liquide comprennent des particules sensiblement sphériques tandis que les poudres obtenues par atomisation au gaz comprennent des particules de forme irrégulière.

Afin d'une part, de garantir la fluidité nécessaire à l'injection et au moulage du mélange chauffé mais sans inhomogénéités ni bulles d'air, et, d'autre part, d'obtenir à l'issue de l'étape de moulage par injection une pièce intermédiaire présentant une cohésion suffisante pour assurer sa solidité et permettre sa manipulation, il faut s'assurer que les particules solides soient enrobées de manière homogène de liant, tout en utilisant le minimum de liant et en assurant une compacité importante des particules solides dans la future pièce moulée.

A cet effet, le volume de particules de structurant solide et de lubrifiant solide, appelé couramment « taux de charge » représente entre 40% et 75%, préférentiellement entre 55 % et 60 % du volume de mélange solide avant fabrication des granulés. Le taux de charge est préférentiellement choisi pour représenter une fraction volumique légèrement inférieure au « taux de charge critique », taux pour lequel toutes les particules de solide structurant sont en contact, les autres composants liant et lubrifiant solide remplissant les interstices. Au-delà du taux de charge critique, il n'est plus possible de procéder à l'injection. Le volume de liant représente alors le complément en volume.

La fraction volumique de liant est de préférence choisie pour que, d'une part, dans les granulés la surface des particules de structurant solide et de lubrifiant solide soit entièrement recouverte, d'autre part, le liant soit en quantité suffisante pour assurer une fluidité du mélange adaptée pour l'injection et le moulage mais par ailleurs que le liant ne soit pas en quantité excessive de manière à ne pas induire des défauts tels qu'un manque de cohésion et de tenue de la pièce après élimination du liant et un manque d'homogénéité de la pièce moulée ainsi qu'une présence de bulles d'air.

Pendant le malaxage, le mélange est chauffé à une température située dans la zone de fusion du liant et, de préférence, autour de la température de fusion de ce dernier. Le malaxage est alors assuré pendant une durée suffisante pour permettre un enrobage uniforme, par le liant, des particules de solide structurant et de lubrifiant solide. Le malaxage peut être réalisé grâce à un mélangeur ou à une extrudeuse sollicitant le mélange visqueux avec un fort taux de cisaillement, ce qui permet d'obtenir un mélange homogène.

Après malaxage, le mélange ainsi obtenu est refroidi soit de manière accélérée, soit par refroidissement naturel à l'air libre jusqu'à former un ou plusieurs blocs de taille relativement importante.

Le mélange sous forme solide est alors broyé pour produire des granulés d'un composé ou mélange solide comprenant les particules de solide structurant, les particules de lubrifiant solide et le liant.

Les granulés de composé solide peuvent alors faire l'objet d'un stockage plus ou moins long avant leur mise en oeuvre pour la fabrication d'une pièce moulée en matériau autolubrifiant telle qu'un couteau de tondeuse selon l'invention.

Le moulage de la pièce moulée est effectué dans une presse d'injection sous pression telle que celles utilisées pour l'injection moulage de matière plastique. Dans une telle presse les granulés de mélange solide sont, tout d'abord, malaxés et chauffés jusqu'à une température supérieure ou égale à la température de fusion du liant et inférieure, d'une part, à la température de fusion du solide structurel et, d'autre part, à la température de fusion du lubrifiant solide. le fluide visqueux ainsi obtenu est injecté sous pression dans un moule présentant une forme correspondant à la forme de la pièce en fin de processus de fabrication, tout en tenant compte des phénomènes de retrait qui interviendront lors des traitements faisant suite au moulage.

La pièce moulée est refroidie sous pression à l'intérieur du moule jusqu'à une température inférieure à la température de fusion du liant, de manière à solidifier le liant et à conférer ainsi à la pièce une tenue qui permette son retrait ou éjection du moule sans risque de déformation.

Après ce refroidissement la pièce moulée est donc retirée du moule de préférence par un robot afin d'éviter son altération. En effet, la pièce moulée est fragile dans la mesure où elle est formée d'un ensemble de particules de solide structurant et de lubrifiant solide maintenues entre elles par le liant.

Après démoulage, la pièce moulée subit une étape d'élimination du liant, parfois appelée « déliantage ». Cette étape, qui est effectuée de manière à ne pas détériorer la géométrie de la pièce, peut être conduite de différentes manières.

Par voie thermique, éventuellement sous atmosphère contrôlée, la pièce subit une ou plusieurs étapes de variation contrôlée de la température (vitesse de montée ou descente en température, paliers de maintien d'une température pendant une certaine durée, etc.). Les différents composants du liant, ayant des températures de transformation physique plus basses que le solide structurant et le lubrifiant solide, peuvent alors être éliminés par exemple par évaporation, décomposition voire pyrolyse.

Par voie chimique, des composants du liant peuvent être éliminés par l'utilisation d'un solvant comme par exemple de l'eau, un solvant organique ou encore du CO2 supercritique. L'élimination de certains composant du liant peut également résulter d'une réaction catalytique comme, par exemple, une dépolymérisation chimique à 120°C sous acide nitrique dans le cas du liant de la gamme de granulés commercialisés sous la marque *Catamold* ® par la société BASF.

Un enchainement ou une combinaison de différents traitements pour éliminer tous les composés du liant est également possible. En effet, le liant peut être composé d'au moins deux constituants, l'un, par exemple une cire, s'évacuant plus rapidement et permettant ainsi d'ouvrir des canaux internes débouchant sur des pores externes pour faciliter l'évacuation de l'autre constituant ainsi que d'autres constituants éventuels. Cette évacuation intervient alors sans surpression qui risquerait de détériorer la pièce voire de la faire éclater.

Au terme de l'étape d'élimination du liant de la pièce moulée, il est obtenu une pièce très poreuse formée de particules de solide structurant et de particules de lubrifiant solide. Cette pièce peut en fait encore contenir des résidus de liant qui permettent de maintenir les particules solides entre elles. Cette pièce poreuse est particulièrement fragile et ne présente pas les caractéristiques mécaniques nécessaires à sa mise en oeuvre pour l'application visée.

Il est alors mis en oeuvre une opération de frittage consistant à chauffer en atmosphère contrôlée, par exemple, réductrice pour éviter la corrosion des métaux. Il est à noter que si des résidus de liant sont encore présents après l'opération d'élimination, leur élimination est assurée dans le four de frittage en raison des hautes températures nécessaires à la réalisation de cette étape. A cet égard, les étapes d'élimination du liant et de frittage peuvent être réalisées dans le même four, ce qui de plus évite de déplacer la pièce poreuse très fragile.

Lors du frittage, la pièce est densifiée et consolidée grâce aux phénomènes de diffusion solide et de croissance des grains. Le frittage peut faire intervenir une ou plusieurs phases de chauffage, éventuellement une ou plusieurs phases de maintien à une température donnée ainsi qu'une ou plusieurs phases de refroidissement. Lors du frittage la pièce moulée est chauffée à une température élevée mais de préférence légèrement inférieure à la température de fusion du solide structurant ainsi qu'à la température de fusion du lubrifiant solide.

La température de frittage choisie pourra être par exemple comprise entre 1000°C et 1200°C. Lorsque le structurant solide est un acier inoxydable et le lubrifiant solide du disulfure de molybdène MoS2 la température de frittage peut être comprise en 900°C et 1250°C et de manière préférée comprise entre 1000°C et 1185°C. Ainsi la température de frittage peut être de l'ordre de 1100°C.

Lors du frittage la pièce moulée connaît un retrait isotrope généralement compris entre 10 % et 20% de sorte que les dimensions du moule utilisé dans l'étape d'injection doivent en tenir compte.

Après l'étape de frittage la pièce mécanique peut éventuellement faire l'objet d'un traitement ultérieur comme, par exemple, une finalisation de la densification jusqu'à 100% par Compression Isostatique à Chaud (en anglais HIP pour « Hot Isostatic Pressing »), un traitement thermique, une application d'un revêtement ou un usinage. Toutefois, il est à noter qu'à l'issue du frittage, la pièce présente des caractéristiques mécaniques permettant sa mise en oeuvre dans l'application visée. Ainsi, dans le cadre de l'invention, à l'issue du frittage les couteaux de tondeuse peuvent être directement assemblés pour former un bloc de coupe de tondeuse tel qu'illustré à la figure 1. De telles pièces finales ne sont pas poreuses et possèdent une densité supérieure à 95% de la densité théorique du solide structurant, ce qui leur confère de bonnes propriétés mécaniques, comparables à celles des pièces massives obtenues par d'autres procédés de fabrication.

Il doit être noté que le procédé selon l'invention peut être utilisé pour fabriquer d'autres pièces mécaniques que des couteaux de tondeuse.

Selon l'exemple de réalisation décrit précédemment, les dents des couteaux possèdent une forme triangulaire. Toutefois, les dents des couteaux peuvent avoir toute autre forme appropriée comme, par exemple, une forme de losange relié par un sommet au corps du couteau ou une autre forme plus complexe.

Bien entendu, diverses modifications peuvent être apportées au procédé de fabrication selon l'invention ainsi qu'au couteau de tondeuse conforme à l'invention dans le cadre des revendications annexées.

## Revendications

1. Procédé de fabrication d'une pièce de coupe comprenant les étapes successives suivantes :
- mise en oeuvre d'un mélange comprenant au moins des particules d'un solide structurant et un liant présentant une température de fusion inférieure à celle du solide structurant,
- malaxage et chauffage du mélange jusqu'à une température supérieure ou égale à la température de fusion du liant et inférieure à la température de fusion du solide structurant,
- injection sous pression du fluide obtenu dans un moule,
- refroidissement, dans le moule, de la pièce jusqu'à une température inférieure à la température de fusion du liant,
- éjection de la pièce refroidie hors du moule,
- élimination du liant de la pièce,
- frittage de la pièce,
**caractérisé en ce que** le mélange comprend au moins :
- des particules solides d'un solide structurant choisi parmi :
- un métal,
- un alliage métallique,
- une céramique,
- un mélange de céramiques,
- un composite métal-céramique,
- ou un mélange des solides structurants précédents,
- un liant,
- des particules d'un lubrifiant solide présentant une température de fusion supérieure à la température de fusion du liant.

2. Procédé de fabrication selon la revendication 1, **caractérisé en ce que** le lubrifiant solide est choisi parmi :
- le disulfure de molybdène MoS₂,
- le nitrure de bore BN,
- le graphite,
- l'étain Sn, le cuivre Cu, le zinc Zn, le plomb Pb, ou des alliages de ces métaux,
- l'argent Ag,
- des mélanges de ces matériaux.

3. Procédé de fabrication selon l'une des revendications précédentes, **caractérisé en ce que** le solide structurant est choisi parmi :
- les aciers,
- les aciers inoxydables,
- les aciers faiblement alliés,
- les alliages métalliques,
- les alliages magnétiques,
- les métaux réfractaires,
- les métaux durs,
- les céramiques,
- les mélanges de ceux-ci.

4. Procédé de fabrication selon l'une des revendications précédentes, **caractérisé en ce que** le liant est choisi parmi :
- un liant à base de polymère thermoplastique ou de cire,
- un liant polyacétal,
- un liant soluble à l'eau,
- un liant gélifiant ou réticulant,
- un verre.

5. Procédé de fabrication selon l'une des revendications précédentes, **caractérisé en ce que** la pièce finale comprend en poids :
- entre 0,1 % et 20% de lubrifiant solide et, de manière préférée, entre 1% et 10% de lubrifiant solide,
- le complément en masse de solide structurant.

6. Procédé de fabrication selon l'une des revendications précédentes, **caractérisé en ce que** le mélange utilisé se présente initialement sous la forme de granulés d'un mélange solide comprenant le liant et les particules de solide structurant et de lubrifiant solide.

7. Procédé de fabrication selon la revendication 6, **caractérisé en ce qu'**il comprend préalablement à la mise en oeuvre du mélange, une séquence de préparation des granulés de mélange solide, séquence qui comprend les étapes suivantes :
- mise en oeuvre de particules d'un solide structurant,
- mise en oeuvre de particules d'un lubrifiant solide,
- mise en oeuvre d'un liant,
- malaxage et chauffage des trois composants, à une température suffisante pour assurer une fusion au moins partielle du liant,
- refroidissement du mélange,
- broyage du mélange pour produire les granulés du mélange solide comprenant au moins les particules solides de solide structurant, les particules de lubrifiant solide et le liant.

8. Procédé de fabrication selon la revendication 7, **caractérisé en ce que** les particules solides possèdent une taille inférieure ou égale à 100µm, de préférence une taille comprise entre 0,1µm et 50µm, et de manière plus particulièrement préférée comprise entre 1µm et 20µm.

9. Procédé de fabrication selon la revendication 7 ou 8, **caractérisé en ce que** :
- le volume de particules solides, de solide structurant et de lubrifiant solide, représente entre 40% et 75%, préférentiellement entre 55 % et 60 %, du volume total de mélange solide,
- le volume de liant représente le complément en volume.

10. Procédé de fabrication selon l'une des revendications précédentes, **caractérisé en ce que** la pièce de coupe fabriquée métallique est un couteau (2,3) de tondeuse à cheveux ou poils comprenant un corps (4,6) à partir duquel s'étend une série de dents (5,7) qui comprennent une face de contact avec une autre surface de travail.

11. Procédé de fabrication selon la revendication précédente, **caractérisé en ce que** chaque dent (7) présente au moins une arête tranchante.

12. Couteau de tondeuse à cheveux ou poils comprenant un corps (4,6) à partir duquel s'étend une série de dents (5,7) et au moins une surface de contact avec un autre couteau, **caractérisé en ce qu'**il est constitué au moins en partie d'un matériau autolubrifiant comprenant :
- une matrice formée d'un matériau choisi parmi :
- un métal,
- un alliage métallique,
- une céramique,
- un mélange de céramiques,
- un composite métal-céramique,
- un mélange de ces matériaux,
- des particules d'un lubrifiant solide dispersées dans la matrice, le lubrifiant solide étant choisi parmi :
- le disulfure de molybdène MoS₂,
- le nitrure de bore BN,
- le graphite,
- l'étain Sn ou le cuivre Cu ou le zinc Zn ou le plomb Pb ou des alliages de ces métaux,
- l'argent Ag,
- des mélanges de ces matériaux.

13. Couteau de tondeuse selon la revendication 12, **caractérisé en ce que** chaque dent (7) comprend au moins une arête tranchante.

14. Couteau de tondeuse selon la revendication 12 ou 13, **caractérisé en ce qu'**il est obtenu par le procédé de fabrication selon la revendication 10 ou 11.

15. Bloc de coupe pour une tondeuse à cheveux ou poils comprenant au moins un couteau de tondeuse (2) selon l'une des revendications 12 à 14 et un couteau de tondeuse (3) comprenant un corps (6) à partir duquel s'étend une série de dents (7) et au moins une surface de contact avec les dents de l'autre couteau (2).

## Patentansprüche

1. Fertigungsverfahren für ein Schneidelement mit den folgenden Schritten:
- Herstellung eines Gemischs, das mindestens Partikel eines strukturierenden Feststoffs und ein Bindemittel mit einem Schmelzpunkt unter dem Schmelzpunkt des strukturierenden Feststoffs enthält,
- Vermischung und Erwärmung des Gemischs auf eine Temperatur, die höher oder gleich dem Schmelzpunkt des Bindemittels und niedriger als der Schmelzpunkt des strukturierenden Feststoffs ist,
- Druckguss des Fluids in eine Form,
- Abkühlung des Werkstücks in der Form auf eine Temperatur unter dem Schmelzpunkt des Bindemittels,
- Entformung des erkalteten Werkstücks,
- Entfernung des Bindemittels aus dem Werkstück,
- Sintern des Werkstücks,
wobei das Gemisch mindestens Folgendes enthält:
- feste Partikel eines der folgenden strukturierenden Feststoffe:
- Metall,
- Metalllegierung,
- Keramikmaterial,
- Keramikgemisch,
- Metall-Keramik-Verbundmaterial
- oder Gemisch aus den vorhergehend genannten strukturierenden Feststoffen,
- Bindemittel,
- Partikel eines Festschmierstoffs mit einem Schmelzpunkt, der höher als der Schmelzpunkt des Bindemittels ist.

2. Fertigungsverfahren nach Patentanspruch 1, **dadurch gekennzeichnet, dass** einer der folgenden Stoffe als Festschmierstoff verwendet wird:
- Molybdändisulfid MoS2,
- Bornitrid BN,
- Grafit,
- Zinn Sn, Kupfer Cu, Zink Zn, Blei Pb oder Legierungen dieser Metalle,
- Silber Ag,
- Gemische dieser Stoffe.

3. Fertigungsverfahren nach einem der vorhergehend genannten Patentansprüche, **dadurch gekennzeichnet, dass** einer der folgenden Stoffe als strukturierender Feststoff verwendet wird:
- Stähle,
- Edelstähle,
- niedrig legierte Stähle,
- Metalllegierungen,
- magnetische Legierungen,
- hochschmelzende Metalle,
- Hartmetalle,
- Keramikmaterial,
- Gemische dieser Stoffe.

4. Fertigungsverfahren nach einem der vorhergehend genannten Patentansprüche, **dadurch gekennzeichnet, dass** einer der folgenden Stoffe als Bindemittel verwendet wird:
- Bindemittel auf Basis eines thermoplastischen Polymers oder auf Wachsbasis,
- Polyacetalbindemittel,
- wasserlösliche Bindemittel,
- gelierendes oder vernetzendes Bindemittel,
- Glas.

5. Fertigungsverfahren nach einem der vorhergehend genannten Patentansprüche, **dadurch gekennzeichnet, dass** das fertige Teil folgende Masseanteile aufweist:
- 0,1 % bis 20 % Festschmierstoff, möglichst aber 1 % bis 10 % Festschmierstoff,
- der verbleibende Anteil entfällt auf den strukturierenden Feststoff.

6. Fertigungsverfahren nach einem der vorhergehend genannten Patentansprüche, **dadurch gekennzeichnet, dass** das verwendete Gemisch zunächst als granuliertes Feststoffgemisch aus dem Bindemittel und den Partikeln des strukturierenden Feststoffs und des Festschmierstoffs vorliegt.

7. Fertigungsverfahren nach Patentanspruch 6, **dadurch gekennzeichnet, dass** vor der Herstellung des Gemischs mithilfe der folgenden Schritte das granulierte Feststoffgemisch hergestellt wird:
- Herstellung von Partikeln eines strukturierenden Feststoffs,
- Herstellung von Partikeln eines Festschmierstoffs,
- Herstellung eines Bindemittels,
- Vermischung und Erwärmung der drei Bestandteile auf eine Temperatur, die ausreichend hoch ist, damit das Bindemittel mindestens teilweise schmilzt,
- Abkühlung des Gemischs,
- Mahlen des Gemischs zur Herstellung des granulierten Feststoffgemischs, das mindestens die festen Partikel des strukturierenden Feststoffs, die Partikel des Festschmierstoffs und das Bindemittel enthält.

8. Fertigungsverfahren nach Patentanspruch 7, **dadurch gekennzeichnet, dass** die festen Partikel kleiner oder gleich 100µm sind, besser jedoch eine Größe von 0,1 µm bis 50µm und möglichst von 1µm bis 20µm haben.

9. Fertigungsverfahren nach Patentanspruch 7 oder 8, wobei Folgendes gilt:
- Der Anteil des Volumens der Feststoffpartikel des strukturierenden Feststoffs und des Festschmierstoffs liegt zwischen 40 % und 75 %, möglichst jedoch zwischen 55 % und 60 % des Gesamtvolumens des Feststoffgemischs,
- der verbleibende Anteil entfällt auf das Volumen des Bindemittels.

10. Fertigungsverfahren nach einem der vorhergehend genannten Patentansprüche, **dadurch gekennzeichnet, dass** das hergestellte metallische Schneidelement das Messer (2, 3) eines Langhaarschneiders für menschliches oder tierisches Haar mit einem Körper (4, 6) ist, von dem eine Reihe von Zinken (5, 7) ausgeht, die eine Kontaktfläche mit einer anderen Arbeitsfläche haben.

11. Herstellung nach dem vorhergehenden Patentanspruch, **dadurch gekennzeichnet, dass** jeder Zinken (7) mindestens eine Schneidkante aufweist.

12. Messer eines Langhaarschneiders für tierisches oder menschliches Haar mit einem Körper (4, 6), von dem eine Reihe von Zinken (5, 7) ausgeht, und mindestens einer Kontaktfläche mit einem anderen Messer, **dadurch gekennzeichnet, dass** es mindestens teilweise aus einem selbstschmierenden Material besteht, das Folgendes enthält:
- eines der folgenden Grundmaterialien:
- Metall,
- Metalllegierung,
- Keramikmaterial,
- Keramikgemisch,
- Metall-Keramik-Verbundmaterial,
- Gemisch aus diesen Materialien,
- Partikel eines der folgenden im Grundmaterial dispergierten Festschmierstoffe:
- Molybdändisulfid MoS2,
- Bornitrid BN,
- Grafit,
- Zinn Sn oder Kupfer Cu oder Zink Zn oder Blei Pb oder Legierungen dieser Metalle,
- Silber Ag,
- Gemische dieser Stoffe.

13. Messer eines Langhaarschneiders nach Patentanspruch 12, **dadurch gekennzeichnet, dass** jeder Zinken (7) mindestens eine Schneidkante aufweist.

14. Messer eines Langhaarschneiders nach Patentanspruch 12 oder 13, **dadurch gekennzeichnet, dass** es mit dem Verfahren nach Patentanspruch 10 oder 11 gefertigt wird.

15. Messerblock für einen Langhaarschneider für menschliches oder tierisches Haar mit mindestens einem Langhaarschneidermesser (2) nach einem der Patentansprüche 12 bis 14 und einem Langhaarschneidermesser (3) mit einem Körper (6), von dem eine Reihe von Zinken (7) ausgeht, und mindestens einer Kontaktfläche mit den Zinken des anderen Messers (2).

## Claims

1. Manufacturing method for a cutting part comprising the following successive steps:
- implementation of a mixture comprising at least particles of a structuring solid and a binder having a melting point lower than that of the structuring solid,
- mixing and heating of the mixture to a temperature greater than or equal to the melting point of the binder and less than the melting point of the structuring solid,
- injection under pressure of the fluid obtained in a mould,
- cooling of the part, in the mould, to a temperature below the melting point of the binder,
- ejection of the cooled part out of the mould,
- elimination of the binder from the part,
- sintering of the part,
**characterised in that** the mixture comprises at least :
- solid particles of a structuring solid selected from:
- a metal,
- a metallic alloy,
- a ceramic,
- a mixture of ceramics,
- a metal-ceramic composite,
- or a mixture of the preceding structuring solids,
- a binder,
- particles of a solid lubricant having a melting point greater than the melting point of the binder.

2. Manufacturing method according to claim 1, **characterised in that** the solid lubricant is selected from:
- molybdenum disulphide MoS2,
- boron nitride BN,
- graphite,
- tin Sn, copper Cu, zinc Zn, lead Pb, or alloys of these metals,
- silver Ag,
- mixtures of these materials.

3. Manufacturing method according to one of the preceding claims, **characterised in that** the structuring solid is selected from:
- steels,
- stainless steels,
- low alloy steels,
- metallic alloys,
- magnetic alloys,
- refractory metals,
- hard metals,
- ceramics,
- mixtures thereof.

4. Manufacturing method according to one of the preceding claims, **characterised in that** the binder is selected from:
- a binder based on a thermoplastic polymer or wax,
- a polyacetal binder,
- a water-soluble binder,
- a gelling or crosslinking binder,
- a glass.

5. Manufacturing method according to one of the preceding claims, **characterised in that** the final part includes by weight:
- between 0.1 % and 20 % of solid lubricant and, preferably, between 1 % and 10 % of solid lubricant,
- the weight complement of structuring solid.

6. Manufacturing method according to one of the preceding claims, **characterised in that** the mixture used is initially in the form
of pellets of a solid mixture comprising the binder and the particles of structuring solid and solid lubricant.

7. Manufacturing method according to claim 6, **characterised in that** it comprises, prior to implementation of the mixture, a sequence of preparing the pellets of solid mixture, a sequence which comprises the following steps:
- implementation of particles of a structuring solid,
- implementation of particles of a solid lubricant,
- implementation of a binder,
- mixing and heating of the three components to a temperature sufficient to ensure at least partial melting of the binder,
- cooling of the mixture,
- grinding of the mixture to produce the pellets of solid mixture comprising at least the solid particles of structuring solid, the particles of solid lubricant and the binder.

8. Manufacturing method according to claim 7, **characterised in that** the solid particles have a size of less than or equal to 100 µm, preferably a size of between 0.1 µm and 50 µm, and more preferably of between 1 µm and 20 µm.

9. Manufacturing method according to claim 7 or 8, **characterised in that**:
- the volume of solid particles, structuring solid and solid lubricant is between 40 % and 75 %, preferably between 55 % and 60 %, of the total volume of solid mixture,
- the volume of binder is the complement by volume.

10. Manufacturing method according to one of the preceding claims, **characterised in that** the metallic cutting part manufactured is a hair clipper knife (2, 3) comprising a body (4, 6) from which there extends a series of teeth (5, 7) which comprise a contact face with another work surface.

11. Manufacturing method according to the preceding claim, **characterised in that** each tooth (7) has at least one cutting edge.

12. Hair clipper knife comprising a body (4, 6) from which there extends a series of teeth (5 ,7) and at least one contact surface with another knife, **characterised in that** it consists at least partly of a self-lubricating material comprising:
- a matrix formed of a material selected from:
- a metal,
- a metallic alloy,
- a ceramic,
- a mixture of ceramics,
- a metal-ceramic composite,
- a mixture of these materials,
- particles of a solid lubricant dispersed in the matrix, the solid lubricant being selected from:
- molybdenum disulphide MoS2,
- boron nitride BN,
- graphite,
- tin Sn, copper Cu, zinc Zn or lead Pb, or alloys of these metals,
- silver Ag,
- mixtures of these materials.

13. Clipper knife according to claim 12, **characterised in that** each tooth (7) has at least one cutting edge.

14. Clipper knife according to claim 12 or 13, **characterised in that** it is obtained by the manufacturing method according to claim 10 or 11.

15. Cutting unit for hair clippers comprising at least one clipper blade (2) according to one of claims 12 to 14 and a clipper knife (3) comprising a body (6) from which there extends a series of teeth (7) and at least one contact surface with the teeth of the other knife (2).
